# EUROPÄISCHE PATENTSCHRIFT

(11) **EP 1 716 192 B1**
(45) Veröffentlichungstag und Bekanntmachung des Hinweises auf die Patenterteilung: **27.06.2007**
(21) Anmeldenummer: 04805002.5
(22) Anmeldetag: 22.12.2004
(51) Int. Cl.: C08G 18/10, C08G 18/42, C08G 18/76, C09J 175/06

(54) **FEUCHTIGKEITSHÄRTENDE SCHMELZKLEBSTOFFE, VERFAHREN ZU DEREN HERSTELLUNG UND DEREN VERWENDUNG**
MOISTURE-HARDENING HOT-MELT ADHESIVES, METHOD FOR THE PRODUCTION AND THE USE THEREOF
ADHESIFS THERMOFUSIBLES DURCISSABLES A L'HUMIDITE, PROCEDE POUR LEUR PRODUCTION ET LEUR UTILISATION

(30) Priorität: 20.02.2004 DE 102004008692; 11.06.2004 DE 102004028488
(43) Veröffentlichungstag der Anmeldung: 02.11.2006
(73) Patentinhaber: Degussa GmbH, 40474 Düsseldorf (DE)
(72) Erfinder: BRAND, Thorsten, 45772 Marl (DE); BRENNER, Gabriele, 48249 Dülmen (DE); FRANZMANN, Giselher, 58453 Witten (DE); ZAGEFKA, Hans-Dieter, 45721 Haltern am See (DE)
(86) Internationale Anmeldenummer: PCT/EP2004/053670
(87) Internationale Veröffentlichungsnummer: WO 2005/090428

(56) Entgegenhaltungen:
- EP-A- 0 448 825
- EP-A- 1 149 850
- DE-A1- 3 827 224
- DE-A1- 19 961 941
- US-A- 5 916 964

## Beschreibung

Die vorliegende Erfindung betrifft die Herstellung von Polyestern aus langkettigen, linearen Dicarbonsäuren mit 13 - 22 Methylengruppen und beliebigen Polyolen. Die Erfindung beschreibt ebenso die Herstellung von reaktiven Schmelzklebstoffen mit den erfindungsgemäßen Polyestern und deren Verwendung zum Fugen, Dichten und Beschichten.

Zur Verbesserung des Scherstandvermögens von Schmelzklebstoffen bei erhöhter Temperatur setzt man reaktive Klebstoffsysteme ein, die entweder durch Energiezufuhr vernetzt werden oder mittels Feuchtigkeit zum unschmelzbaren Klebstoff aushärten.

Für viele Anwendungen ist ein rasches Abbinden der verwendeten reaktiven Schmelzklebstoffe nach ihrer Applikation erforderlich, um eine sofortige weitere Verarbeitung zu ermöglichen. Dies stellt bei bisher bekannten feuchtigkeitshärtenden Schmelzklebstoffen ein Problem dar.

So bei feuchtigkeitshärtenden Schmelzklebstoffen aus der Klasse der isocyanatfunktionellen Polymere z. B. gemäß DE 24 01 320 A, EP 0 107 097 A und EP 0 125 009 A. Dort dienen überwiegend Polyester aus Adipinsäure, Butandiol-1,4 und Hexandiol-1,6 als Kettenrückgrat. Eine Verkürzung der Abbindezeit kann durch Zusatz von Harzen und thermoplastischen Polymeren erreicht werden. Zu diesem Zweck beschreibt die EP 0 232 055 A die Kombination von flüssigen Isocyanat-Präpolymeren mit Ethylen/Vinylacetatcopolymeren oder Methylstyrolharzen, die EP 0 107 097 A mit thermoplastischen Polyurethanen oder Kondensationsharzen und die EP 0 246 473 A mit Acrylatoligomeren. Hierbei führen die thermoplastischen Anteile zu einer Verringerung des Wärmescherstandvermögens solcher Schmelzklebstoffe nach der Vernetzung durch Luftfeuchtigkeit.

Zwar haben Schmelzklebstoffe nach EP 0 248 658 A, welche Polyester mit mehr als 50 % aromatischer Dicarbonsäure anstelle von aliphatischer Dicarbonsäure enthalten, eine verbesserte Abbindegeschwindigkeit. Solche Produkte besitzen jedoch den Nachteil einer zu hohen Schmelzviskosität, was Probleme bei der Herstellung der Präpolymeren und bei der Verarbeitung der Schmelzklebstoffe mit sich bringt. In der bevorzugten Ausführungsform werden die freien Isocyanatgruppen mit einem Blockierungsmittel, beispielsweise Caprolacton versehen, um die Lagerstabilität des Schmelzklebers zu verbessern. Zur Deblockierung sind allerdings im Vergleich zu nicht blockierten Polyisocyanaten wesentlich höhere Applikationstemperaturen erforderlich, was die Anfangsfestigkeiten dieser Schmelzkleber ungünstig beeinflusst.

Die EP 0 340 906 beschreibt schnell abbindende Polyurethanklebstoffe, die aus einer Mischung von mindestens zwei amorphen Präpolymeren bestehen, die durch unterschiedliche Glasübergangstemperaturen charakterisiert sind. Das erste Polyurethanpräpolymer hat eine Glasübergangstemperatur oberhalb Raumtemperatur und das zweite Polyurethanpräpolymere hat eine Glasübergangstemperatur unterhalb Raumtemperatur. Das Präpolymere mit der höheren Glasübergangstemperatur besteht bevorzugt aus einem Polyesterdiol und einem Polyisocyanat. Das Polyesterdiol kann ein Copolymer aus aromatischen Säuren (wie Isophthalsäure oder Terephthalsäure) und/oder aliphatischen Säuren (wie Adipinsäure, Azelainsäure oder Sebazinsäure) und niedrigmolekularen Diolen (wie Ethylenglycol, Butandiol, Hexandiol) sein. Das Präpolymer mit der niedrigen Glasübergangstemperatur besteht aus einem linearen oder schwach verzweigten Polyester, einem Polyether oder einem anderen OH-terminierten Polymer und Polyisocyanat. Auch spezielle Polyester wie Polycaprolactone oder Polycarbonate können eingesetzt werden. Kristalline Polyester aus längerkettigen Dicarbonsäuren werden nicht genannt. Die Viskosität der Polyurethanschmelzklebstoffe liegt bei 130°C in einem Bereich von mindestens 30 bis 90 Pa.s.

WO 99/28363 beschreibt einen lösungsmittelfreien feuchtigkeitshärtenden Polyurefhanklebstoff, der bei Raumtemperatur fest ist, bestehend aus einem Reaktionsprodukt aus einem Polyisocyanat und einem niedrigmolekularen Polymer aus ethylenisch ungesättigten Monomeren, wobei das Polymer aktive Wasserstoffatome trägt, sowie mindestens einem Polyurethanpräpolymeren mit freien Isocyanatgruppen, hergestellt aus mindestens einem Polyol und einem Polyisocyanat. Das Polyol kann ein Polyetherdiol, Polyethertriol, Polyesterpolyol, aromatisches Polyol oder Mischungen daraus sein.

Unter dem Polyesterdiol wird ein Polyester verstanden, der mehr als eine OH- Gruppe, bevorzugt zwei endständige OH-Gruppen hat. Der Polyester wird entweder aus aliphatischen Hydroxycarbonsäuren oder aus aliphatischen und/oder aromatischen Dicarbonsäuren mit 6 bis 12 C-Atomen und Diolen mit 4 bis 8 C-Atomen nach den bekannten Verfahren hergestellt. Von Bedeutung sind Copolyester aus
1. Adipinsäure, Isophthalsäure und Butandiol
2. Adipinsäure, Isophthalsäure und Hexandiol
3. Adipinsäure, Isophthalsäure, Phthalsäure, Ethylenglykol, Neopentylglykol, und 3-Hydroxy-2,2-dimethylpropyl-3-hydroxy-2,2-dimethylpropanoat und
4. Adipinsäure, Phthalsäure, Neopentylglykol und Ethylenglykol.

Das Polyesterpolyol ist bevorzugt amorph, kann aber auch schwach kristallin sein. Bevorzugt wird eine Mischung aus einem amorphen und einem teilkristallinen Polyester eingesetzt. Die Kristallinität darf sich dabei nur so schwach entwickeln, dass der fertige Klebstoff nicht opak wird. Der Schmelzpunkt des teilkristallinen Polyesters ist im Bereich von 40 bis 70 °C, bevorzugt im Bereich von 45 bis 65 °C. Als bevorzugtes, teilkristallines Polyesterglykol wird Butandioladipat mit einem Molekulargewicht von 3500 und einem Schmelzpunkt von 50°C eingesetzt.

US 6,221,978 beschreibt einen feuchtigkeitshärtbaren Polyurethanklebstoff, der aus einem Epoxidharz und einem Polyurethanpräpolymeren besteht. Das Polyurethanpräpolymer ist ein Reaktionsprodukt eines Polyols und eines Polyisocyanats. Das Polyol ist ein Reaktionsprodukt aus aromatischen Disäuren, optional Comonomerdisäuren und Diolen. Als Comonomersäuren werden genannt Dodecandisäure, Bernsteinsäure, Glutarsäure, Adipinsäure, Azelainsäure, Sebazinsäure, Octadecandicarbonsäure, 1,4-Cyclohexandicarbonsäure, Dimerfettsäuren und Fumarsäure. In einer besonderen Ausführungsform ist die aromatische Disäure Isophthalsäure und die Comonomersäure ist Adipinsäure. Von entscheidender Bedeutung ist, dass die aromatische Disäure frei von Phthalsäure ist.

In einer Ausführungsform enthält der Klebstoff zusätzlich kristalline Polyesterpolyole. Das kristalline Polyesterpolyol besteht aus einem Reaktionsprodukt eines aliphatischen Diols mit 2 bis 10 Methylengruppen und einer aliphatischen Disäure mit 2 bis 10 Methylengruppen. In einer besonderen Ausführungsform besteht das kristalline Polyesterpolyol aus Hexandiol und Dodecandisäure.

Der Klebstoff wird für die Verklebung von schwierig zu verklebenden Substraten mit niedriger Oberflächenenergie eingesetzt. Ein schnelles Abbindeverhalten der beschriebenen Schmelzklebstoffe wird nicht gezeigt

In der DE 38 27 224 A sind feuchtigkeitshärtende isocyanatfunktionelle Schmelzklebstoffe mit besonders hoher Abbindegeschwindigkeit beschrieben. Erfindungswesentlich ist dabei die Verwendung von Polyestern, deren Rückgrat bevorzugt rein aliphatisch ist und die mindestens 12 bis zu maximal 26 Methylengruppen in der Repetiereinheit aus Diol und Dicarbonsäuren enthalten, wobei Dicarbonsäuren mit 8-12 Methylengruppen verwendet werden. Besonders bevorzugt sind Dicarbonsäuren mit 10 Methylengruppen. Optional können die aliphatischen Dicarbonsäuren bis zu 80 mol-% durch aromatische Dicarbonsäuren ersetzt sein.

Zur Erreichung einer hohen Abbindegeschwindigkeit ist ein Anteil der erfindungswesentlichen Polyester von mindestens 50 Gew.%, vorzugsweise mehr als 75% Gew.-% in der Mischung erforderlich.

Zwar stellt diese Erfindung schon eine technische Verbesserung dar, eine weitere Steigerung der Abbindegeschwindigkeit für eine effektivere Verarbeitung ist jedoch wünschenswert.

Es bestand daher die Aufgabe zur Entwicklung feuchtigkeitsvernetzender Schmelzklebstoffe, die eine weiter erhöhte Abbindegeschwindigkeit gewährleisten. Die Aufgabe wurde durch Bereitstellung eines Schmelzklebstoffes gemäß den Ansprüchen gelöst Kurze Abbindezeiten von im vorliegenden Fall lösungsmittelfreien reaktiven Schmelzklebstoffen ermöglichen dann bei deren serienmäßiger Verarbeitung höhere Taktgeschwindigkeiten.

Gegenstand der Erfindung sind Schmelzklebstoffe sowie ein Verfahren zu deren Herstellung, enthaltend Umsetzungsprodukte von di- und/oder multifunktionellen (Poly-)Isocyanaten mit Hydroxylpolyestern auf Basis von linearen aliphatischen Dicarbonsäuren mit 13 - 22 Methylengruppen und beliebigen Polyolen in einem OH : NCO-Verhältnis von 1 : 1.2 bis 1 : 3.0, vorzugsweise von 1 : 1.5 bis 1 : 2.5. Die erfindungsgemäßen Hydroxylpolyester besitzen mehr als eine OH-Gruppe, und sie sind ganz besonders bevorzugt difunktionell. Hydroxylpolyester im Sinne der Erfindung haben OH-Zahlen von 5 - 150, vorzugsweise von 10 - 50 sowie Säurezahlen von unter 10, bevorzugt unter 5 und besonders bevorzugt unter 2. Das zahlenmittlere Molekulargewicht der erfindungsgemäßen Polyester beträgt 700 - 22000 g/mol, vorzugsweise 2000 - 10000 g/mol.

Überraschenderweise wurde gefunden, dass mit Hydroxylpolyestern, welche säureseitig lineare aliphatischen Dicarbonsäuren mit 13 - 22 Methylengruppen enthalten, die Abbindezeit verkürzt und die Anfangsfestigkeit erhöht werden kann.

In besonderen Ausführungsformen werden Octadecandisäure und/oder Hexadecandisäure eingesetzt.

Der Schmelzpunkt der erfindungsgemäßen Hydroxylpolyester liegt im Bereich von 30 °C - 125 °C, bevorzugt von 65 °C - 115 °C und ganz besonders bevorzugt in einem Bereich von 70°C-110°C.

Bei den Hydroxylpolyestern auf Basis der langkettigen Dicarbonsäuren mit 13-22 Methylengruppen können diese teilweise durch aliphatische und/oder cycloaliphatische Poly-, bevorzugt Dicarbonsäuren mit kürzeren Kohlenstoffketten ersetzt sein. Außerdem eignen sich Dimerfettsäuren zum Ersatz der erfindungsgemäßen langkettigen Dicarbonsäuren. Säureseitig sind 5 - 100 mol-% der erfindungsgemäßen langkettigen Dicarbonsäuren enthalten, bevorzugt 20 - 100 mol-% und ganz besonders bevorzugt 50 - 100 mol-%.

Beispiele für aliphatische Polycarbonsäuren mit kürzeren Ketten sind Bernsteinsäure, Glutarsäure, Adipinsäure, Azelainsäure, Sebacinsäure und Dodecandisäure. Beispiele für cycloaliphatische Dicarbonsäuren sind die Isomeren der Cyclohexandicarbonsäure. Gegebenenfalls können an Stelle der freien Säuren auch ihre veresterbaren Derivate wie z. B. entsprechende Niedrigalkylester oder cyclische Anhydride eingesetzt werden.

In weiteren Ausführungsformen der erfindungsgemäßen Hydroxylpolyester können die langkettigen Dicarbonsäuren mit 13-22 Methylengruppen zusätzlich zu den kurzkettigen aliphatischen und/oder cycloaliphatischen Polycarbonsäuren und/oder Dimerfettsäuren oder anstelle davon aromatische Polycarbonsäuren, bevorzugt Dicarbonsäuren enthalten, wobei die Polyester säureseitig 5 - 100 mol-% der erfindungsgemäßen langkettigen Dicarbonsäuren enthalten, bevorzugt 20-100 mol-% und ganz besonders bevorzugt 50-100 mol-%.

Beispiele für aromatische Polycarbonsäuren sind Terephthalsäure, Isophthalsäure, Phthalsäure, Naphthalindicarbonsäure, Trimellitsäure und Pyromellitsäure. An Stelle der freien Polycarbonsäuren können auch ihre veresterbaren Derivate wie z. B. entsprechende Niedrigalkylester oder cyclische Anhydride eingesetzt werden.

Enthalten die erfindungsgemäßen Hydroxylpolyester von aromatischen Polycarbonsäuren stammende Bausteine, liegt ihr Schmelzpunkt im Bereich von 30 °C - 140 °C, bevorzugt von 65 °C -135 °C und ganz besonders bevorzugt in einem Bereich von 70 °C - 130 °C.

Die Art der für die erfindungsgemäßen Hydroxylpolyester eingesetzten Polyole ist an sich beliebig. So können aliphatische und/oder cycloaliphatische und/oder aromatische Polyole enthalten sein. Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Nonandiol-1,9, Dodecandiol-1,12, Neopentylglykol, Butylethylpropandiol-1,3, Methylpropandiol, Methylpentandiole, Cyclohexandimethanole, Trimethylolpropan, Pentaerythrol und Mischungen daraus.

Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1, 4 enthalten sein. Besonders bevorzugt sind lineare aliphatische Glykole.

Neben Polyolen und Polycarbonsäuren können auch Lactone für die Synthese der Hydroxylpolyester verwendet werden.

Die erfindungsgemäßen, aliphatischen Dicarbonsäuren mit 13 - 22 Methylengruppen enthaltenden Hydroxylpolyester werden mittels etablierter Techniken für Kondensationsreaktionen hergestellt Hierzu werden beliebige Polyole und die erfindungsgemäße(n) Polycarbonsäure(n) oder ggf. dieselbe(n) im Gemisch mit anderen (cyclo-)aliphatischen und/oder aromatischen Polycarbonsäuren bzw. deren um- oder veresterbaren Derivaten eingesetzt, wobei das Äquivalentverhältnis von Hydroxylgruppen zu Carboxylgruppen 1.02 - 1.5, bevorzugt 1.05 - 1.3 beträgt. Die (Poly-)Kondensation erfolgt bei Temperaturen von 150 °C - 270 °C innerhalb von 3 - 30 h, wobei nach Abspaltung des Großteils der theoretisch berechneten Wassermenge mit Vakuum gearbeitet werden kann. Wahlweise kann auch unter Zusatz von Katalysatoren zur Beschleunigung der (Poly-)Kondensationsrealction und/oder Schleppmitteln zur Abtrennung des Reaktionswassers gearbeitet werden. Typische Katalysatoren sind Organotitan- oder -zinnverbindungen, wie z. B. Tetrabutyltitanat oder Dibutylzinnoxid. Die Katalysatoren können wahlweise am Beginn der Reaktion mit den anderen Ausgangsstoffen oder erst später während der Reaktion chargiert werden. Als Schleppmittel können z. B. Toluol oder diverse SolventNaphta^{®} Qualitäten dienen. Wahlweise können die Hydroxylpolyester ohne oder mit Fahrhilfsmitteln oder Additiven wie z. B. Antioxidantien ausgestattet werden.

Die Polyisocyanate können di- und/oder multifunktionelle, aromatische, aliphatische oder/und cycloaliphatische Isocyanate sein. Aromatische Polyisocyanate sind besonders bevorzugt. Beispiele für Polyisocyanate sind 4,4'-Diphenylmethandiisocyanat, 2,4'-Diphenylmethandiisocyanat, Toluoldüsocyanat-Isomere, Isophorondiisocyanat, Hexamethylendiisocyanat, 4,4'-Dicyclohexylmethandiisocyanat und Mischungen daraus.

In den Schmelzklebstoffen beträgt der Anteil der erfindungsgemäßen Hydroxylpolyester 1-99 Gew.-%, bevorzugt 1-49 Gew.-% und besonders bevorzugt 1-35 Gew.-%.

In bevorzugten Ausführungsformen sind in den Schmelzklebstoffen neben den erfindungsgemäßen Hydroxylpolyestern auch andere Polyole vorhanden, unter denen Polyesterpolyole, Polyetherpolyole und beliebige hydroxylfunktionelle Komponenten zu verstehen sind.

Die beigemischten Polyesterpolyole können flüssige und/oder feste, amorphe und/oder (teil-)kristalline Polyester beliebiger Struktur mit Molekulargewichten Mn zwischen 1000 g/mol und 30000 g/mol, bevorzugt zwischen 2000 g/mol und 10000 g/mol (berechnet aus der Hydroxylzahl) sein, wobei lineare Polyesterpolyole bevorzugt verwendet werden. Die beigemischten Polyetherpolyole sind Polyetherdi- und -triole. Beispiele hierfür sind Homo- und Copolymere aus Ethylenglykol, Propylenglykol und Butandiol-1,4. Das Molekulargewicht Mn der beigemischten Polyetherpolyole sollte in einem Bereich von 200 g/mol bis 10000 g/mol, bevorzugt zwischen 400 g/mol und 6000 g/mol sein.

Beispiele für beliebige hydroxyfunktionelle Komponenten sind funktionalisierte (H-acide), thermoplastische Polyurethane (TPU) und/oder Polyacrylate und/oder Ethylen-Vinylacetatcopolymere (EVA).

Die erfindungsgemäßen Schmelzklebstoffe können bis zu 50 Gew. % an weiteren Zusätzen enthalten. Diese Zusätze können sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze; sowie Alterungsschutz- und Hilfsmittel.

Wie aus den folgenden Beispielen und entsprechenden Vergleichsbeispielen nach dem Stand der Technik ersichtlich wird, bewirkt der Einsatz der erfindungsgemäßen Polyester in Schmelzklebstoffen eine drastische Verkürzung der Abbindezeiten, gezeigt anhand der unten beschriebenen Prüfmethode.

### Beispiele

Nachfolgend ist die vorliegende Erfindung anhand von Beispielen und Vergleichsbeispielen beschrieben. Die Erfindung beschränkt sich jedoch nicht ausschließlich auf diese Beispiele.

### Herstellung der erfindungsgemäßen Hydroxylpolyester

### Beispiel a

Octadecandisäure-1,18 (314 g, 1.0 mol) und Hexandiol-1,6 (132 g, 1.1 mol) werden in einem 1 1-Kolben mit Destillationsaufsatz im Stickstoffstrom aufgeschmolzen. Bei Erreichen einer Temperatur von 160 °C beginnt Wasser abzudestillieren. Innerhalb von einer Stunde wird die Temperatur sukzessive auf 240 °C erhöht Nach einer weiteren Stunde bei dieser Temperatur verlangsamt sich die Wasserabspaltung. Es werden 50 mg Titantetrabutoxid eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Die Hydroxylzahl, die Säurezahl und der Schmelzpunkt wurden gemäß der Angaben zu Tabelle 1 bestimmt und belaufen sich auf 30 mg KOH/g, 1 mg KOH/g und 82 °C.

Die Synthesen der Hydroxylpolyester in den Beispielen b - j und den Vergleichsbeispielen Va - Vc erfolgen in vergleichbarer Weise zu Beispiel a, wobei die in Tabelle 1 angegebenen Dicarbonsäuren und Diole eingesetzt wurden. Im Falle von Beispiel k wird ein Umesterungsschritt von Dimethylterephthalat mit dem Diol gemäß etablierter Technik vorgeschaltet und dann analog Besipiel a weiter verfahren.

**Tabelle 1: Zusammensetzung der Basispolyester (in mol-%) und deren Eigenschaften**

| | Polyesterzusammensetzung | | | | | | | | | Polyestereigenschaften | | |
|---|---|---|---|---|---|---|---|---|---|---|---|---|
| | Säurekomponente | | | | | Akoholkomponente | | | | | | |
| Beispiel | DMT | AD | DDS | HDDS | ODDS | EG | BD | HD | NPG | OHZ | SZ | Smp |
| A | | | | | 100 | | | 100 | | 30 | 1 | 82 |
| B | | | | | 100 | 100 | | | | 28 | 0,5 | 95 |
| c | | | | | 100 | | 100 | | | 28 | 3 | 84 |
| d | | 20 | | | 80 | | | 100 | | 29 | 2 | 78 |
| e | | | | | 100 | 10 | | 90 | | 28 | 1 | 81 |
| f | | | | | 100 | 20 | | 80 | | 30 | 0,5 | 80 |
| g | | | | | 100 | | | 30 | 70 | 31 | 1 | 34/49 |
| h | | 40 | | | 60 | | | 100 | | 34 | 2 | 71 |
| i | | | | 100 | | | | 100 | | 30 | 1 | 80 |
| j | | | | 100 | | 100 | | | | 32 | 1,5 | 92 |
| k | 40 | | | | 60 | | | 100 | | 31 | 1 | 65/72 |
| Vergleichsbeispiele | | | | | | | | | | | | |
| Va | | | 100 | | | | | 100 | | 29 | 1 | 70 |
| Vb | | | 100 | | | 100 | | | | 29 | 1 | 85 |
| Vc | | | 100 | | | | | 30 | 70 | 30 | 0,5 | 15/23 |

| | | | | | | | | | | | | |
|---|---|---|---|---|---|---|---|---|---|---|---|---|
| DMT= Dimethylterephthalat EG = Ethylenglykol AD = Adipinsäure BD = Butandiol-1,4 DDS = Dodecandisäure HD = Hexandiol-1,6 HDDS= Hexadecandisäure NPG = Neopentylglykol ODDS = Octadecandisäure OHZ = Hydroxylzahl, Angabe in mg KOH/g, gemessen nach DIN 53240-2 SZ = Säurezahl, Angabe in mg KOH/g, gemessen nach DIN EN ISO 2114 Smp = Schmelzpunkt, Angabe in °C, DSC-Methode, 2. Aufheizung. Bei Angabe von mehreren Werten liegen entsprechend viele Schmelzpunkte vor. | | | | | | | | | | | | |

### Herstellung und Charakterisierung der feuchtigkeitshärtenden Schmelzklebstoffe

Die in den nachfolgenden Beispielen beschriebenen, feuchtigkeitshärtenden Schmelzklebstoffe (RHM) wurden anhand ihrer Schmelzeviskosität bei 130 °C (Brookfield Thermosel, Spindel Nr. 27), ihres Erweichungspunktes (Ring + Kugel) nach DIN ISO 46 und ihrer Abbindezeit charakterisiert.

### Abbindezeit

Unter der Abbindezeit versteht man die Zeit, die benötigt wird, bis zwei in T-Form verklebte Buchenholzsubstrate (120 mm lang, 20 mm breit, 5 mm dick) eine Festigkeit erreichen, bei der sie nicht mehr durch Belastung mit einem Gewicht von 2 kg getrennt werden können. Die verklebte Fläche beträgt 400 mm².
Zur Herstellung der Verklebung wird der 130 °C heiße Klebstoff auf die zu verklebende Fläche des ersten Substrates mit einem vorgewärmten Metallspatel dünn aufgetragen und sofort mit dem Gegensubstrat in Form eines "T" verklebt. Der lange Schenkel des "T" wird dann in Abhängigkeit von der Zeit mit einem 2 kg Gewicht belastet.

Für die Zeitabstände zwischen Verklebung und Belastung betragen die Intervalle 5 Sekunden bei einer Abbindezeit kleiner zwei Minuten, 30 Sekunden bei einer Abbindezeit größer zwei und kleiner zehn Minuten.

Als Abbindezeit wird der Zeitpunkt des Einhängens des Gewichts angegeben, dessen Belastung die Verklebung mindestens eine halbe Stunde standgehalten hat. Die Angabe erfolgt in Sekunden (s).

### Beispiel RHM-Nr.1

In einem 500 ml Planschliffkolben werden 300 g des Hydroxylpolyesters g aufgeschmolzen und bei 130 °C im Vakuum getrocknet. Danach wird 4,4'-Diphenyhnethandiisocyanat (MEDI) in einem molaren OH/NCO-Verhältnis von 1/2,2 zugegeben und zügig homogenisiert. Zur vollständigen Umsetzung der Reaktionspartner wird 45 Minuten bei 130 °C unter Schutzgasatmosphäre gerührt. Anschließend wird der feuchtigkeitshärtende Schnelzklebstoff abgefüllt. Der resultierende Schmelzklebstoff besitzt eine Schmelzviskosität (130 °C) von 5 Pa.s. Die Abbindezeit beträgt 5 Sekunden und der Erweichungspunkt (Ring und Kugel) liegt bei 53 °C

### Vergleichsbeispiel RHM-Nr.2

Die Durchführung erfolgt analog Beispiel RHM-Nr.1, wobei Hydroxylpolyester g durch Hydroxylpolyester Vc ersetzt ist. Der resultierende Schmelzklebstoff besitzt eine Schmelzviskosität (130°C) von 6 Pa.s. Die Abbindezeit ist größer 1800 Sekunden und der Erweichungspunkt (Ring und Kugel) liegt bei 31 °C.

Der Vergleich der beiden vorhergehenden Beispiele zeigt die drastische Verkürzung der Abbindezeit bei Einsatz der erfindungsgemäßen Polyester.

### Beispiel RHM-Nr.3

In einem 500 ml Planschliffkolben werden 45.5 Gewichtsteile DYNACOLL 7130, 45.5 Gewichtsteile DYNACOLL 7230 und 9 Gewichtsteile des Hydroxylpolyesters a aufgeschmolzen und bei 130 °C im Vakuum getrocknet. Danach wird 4,4'-Diphenylmethandiisocyanat (MDI) in einem molaren OH/NCO-Verhältnis von 1/2,2 zugegeben und zügig homogenisiert. Zur vollständigen Umsetzung der Reaktionspartner wird 45 Minuten bei 130 °C unter Schutzgasatmosphäre gerührt. Anschließend wird der feuchtigkeitshärtende Schmelzklebstoff abgefüllt. Der resultierende Schmelzklebstoff besitzt eine Schmelzviskosität (130 °C) von 18 Pa.s. Die Abbindezeit beträgt 50 Sekunden und der Erweichungspunkt (Ring und Kugel) liegt bei 67 °C.

### Vergleichsbeispiel RHM-Nr.4

Die Durchführung erfolgt analog Beispiel RHM-Nr.1, wobei Hydroxylpolyester a durch Hydroxylpolyester Va ersetzt ist. Der resultierende Schmelzklebstoff besitzt eine Schmelzviskosität (130 °C) von 14 Pa.s. Die Abbindezeit beträgt >1800 Sekunden und der Erweichungspunkt (Ring und Kugel) liegt bei 66 °C.

Der Vergleich der beiden vorhergehenden Beispiele zeigt die drastische Verkürzung der Abbindezeit bei Einsatz der erfindungsgemäßen Polyester.

### RHM-Nr. 5 - 23

Die Durchführung erfolgt analog Beispiel RHM-Nr. 3 gemäß der in Tabelle 2 angegebenen Zusammensetzungen.

**Tabelle 2: Eigenschaften von feuchtigkeitshärtenden Schmelzklebstoffen auf Basis von Gemischen aus Polyolen und 4,4'-MDI (OH:NCO-Verhältnis 1:2,2)**

| RHM-Nr. | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|
| **Zusammensetzung** | | | | | | | | | | | | | | | | | | | |
| DYNACOLL 7130 | 41,5 | 41,5 | 38,5 | 38,5 | 41,5 | 41,5 | 41,5 | 41,5 | 41,5 | 41,5 | 38,5 | 38,5 | 58 | 58 | 58 | 41,5 | 41,5 | 41,5 | 41,5 |
| DYNACOLL 7230 | 41,5 | 41,5 | 38,5 | 38,5 | 41,5 | 41,5 | 41,5 | 41,5 | 41,5 | 41,5 | 38,5 | 38,5 | | | | 41,5 | 41,5 | 41,5 | 41,5 |
| DYNACOLL 7250 | | | | | | | | | | | | | 25 | 25 | | | | | |
| PPG 1000 | | | | | | | | | | | | | | | 25 | | | | |
| Hydroxylpolyester a | 17 | | 23 | | | | | | | | | | | | | | | | |
| Hydroxylpolyester b | | | | | 17 | | | | | | | | 17 | | 17 | | | | |
| Hydroxylpolyester c | | | | | | | 17 | | | | | | | | | | | | |
| Hydroxylpolyester d | | | | | | | | 17 | | | | | | | | | | | |
| Hydroxylpolyester e | | | | | | | | | 17 | | | | | | | | | | |
| Hydroxylpolyester f | | | | | | | | | | 17 | | | | | | | | | |
| Hydroxylpolyester g | | | | | | | | | | | 23 | | | | | | | | |
| Hydroxylpolyester h | | | | | | | | | | | | | | | | 17 | | | |
| Hydroxylpolyester i | | | | | | | | | | | | | | | | | 17 | | |
| Hydroxylpolyester j | | | | | | | | | | | | | | | | | | 17 | |
| Hydroxylpolyester k | | | | | | | | | | | | | | | | | | | 17 |
| Hydroxylpolyester Va | | 17 | | 23 | | | | | | | | | | | | | | | |
| Hydroxylpolyester Vb | | | | | | 17 | | | | | | | | 17 | | | | | |
| Hydroxylpolyester Vc | | | | | | | | | | | | 23 | | | | | | | |
| **RHM-Eigenschaften** | | | | | | | | | | | | | | | | | | | |
| Viskosität (130 °C / Pa.s) | 23 | 16 | 29 | 17 | 19 | 10 | 22 | 21 | 22 | 22 | 20 | 21 | 18 | 15 | 12 | 17 | 19 | 18 | 21 |
| Fp(R+K) (°C) | 67 | 67 | 70 | 67 | 64 | 82 | 67 | 66 | 67 | 67 | 67 | 62 | 69 | 80 | 75 | 67 | 66 | 65 | 66 |
| Abbindezeit (s) | 20 | >1800 | 5 | >600 | 5 | 1800 | 5 | 20 | 5 | 5 | 40 | >1800 | 40 | >1800 | 5 | 330 | 20 | 15 | 350 |

| | | | | | | | | | | | | | | | | | | | |
|---|---|---|---|---|---|---|---|---|---|---|---|---|---|---|---|---|---|---|---|
| RHM-Nr 6, 8, 10, 16 und 18 sind Vergleichsbeispiele | | | | | | | | | | | | | | | | | | | |

4,4'-MDI = 4,4'-Diphenylmethandiisocyanat z. B. Desmodur 44 MC (Fa. Bayer), Suprasec 1306 (Fa. Huntsman), Isonate M124 (Fa. Dow)

DYNACOLL 7130 ist ein amorpher Polyester aus C₂-, C₅- und C₁₀-Diolen, Adipinsäure, Terephthalsäure und Isophthalsäure der Fa. Degussa mit einer Glasübergangstemperatur Tg = 30 °C und Hydroxylzahl 35 mg KOH/g.

DYNACOLL 7230 ist ein flüssiger Polyester aus C₂-, C₅- und C₆-Diolen, Adipinsäure Terephthalsäure und Isophthalsäure der Fa. Degussa mit Tg = - 30 °C und Hydroxylzahl 30 mg KOH/g.

DYNACOLL 7250 ist ein flüssiger Polyester aus C₂-, C₅- und C₆-Diolen, Adipinsäure der Fa. Degussa mit Tg = - 50 °C und Hydroxylzahl 20 mg KOH/g.

### PPG 1000 ist ein Polypropylenglykol mit einem Molekulargewicht von ca. 1000 g/mol

### Beispiel RHM Nr. 24

Ein feuchtigkeitshärtender Schmelzklebstoff aus folgenden Komponenten wird analog RHM-Nr.3 hergestellt: Angabe in Gewichtsteilen
44.2 Polypropylenglykol, Molekulargewicht 2000, OH-Zahl 56
17,7 Hydroxylpolyester a
24,5 Elvacite 2901 (OH-Cruppenhaltiges Polyacrylat der Fa. Lucite, OH-Zahl 6 mg KOH/g)
10,2 Mondur ML (2,4/ 4,4'- MDI von Fa Bayer)

Die Viskosität bei 130 °C beträgt 26 Pas. Der Erweichungspunkt liegt bei 89°C. Die Abbindezeit beträgt 10 Sekunden.

### Vergleichsbeispiel RHM- Nr. 25

Die Durchführung erfolgt analog RHM 24. Angabe in Gewichtsteilen
44.2 Polypropylenglykol, Molekulargewicht 2000, OH-Zahl 56
17,7 Hexandioladipat, Molekulargewicht ca. 3500
24,5 Elvacite 2901 (OH-Gruppenhaltiges Polyacrylat der Fa.Lucite, OH-Zahl 6 mg KOH/g)
10,2 Mondur ML (2,4/ 4,4'- MDI von Fa. Bayer)

Die Viskosität bei 130 °C beträgt 16 Pas. Der Erweichungspunkt liegt bei 64 °C. Die Abbindezeit beträgt 200 Sekunden.

Die Beispiele zeigen, dass Hydroxylpolyester auf Basis langkettiger Dicarbonsäuren mit 13 - 22 Methylengruppen die Abbindezeit der Schmelzklebstoffe drastisch verkürzen, wobei schon weniger als 50 Gew.-% der erfindungsgemäßen Polyester in der Mischung ausreichen, um den Effekt zu erzielen.

Die erfindungsgemäßen Schmelzklebstoffe eignen sich bevorzugt für solche Anwendungen, in denen die miteinander verbundenen Substrate einer sofortigen Weiterverarbeitung ohne zusätzliche mechanische oder andere Fixierung zugeführt werden sollen. Diese Eignung beruht auf dem schnellen Aufbau einer ausreichenden Anfangsfestigkeit beim Abkühlen der Verklebung, noch vor der Aushärtung durch Feuchtigkeitsvemetzung der Isocyanatgruppen. Beispiele für solche Anwendungen finden sich in der holzverarbeitenden Industrie, Automobilindustrie, Bauindustrie, Schuhindustrie, Textilindustrie.

## Patentansprüche

1. Feuchtigkeitsvernetzende Schmelzklebstoffe für die sofortige Weiterverarbeitung der verklebten Substrate, enthaltend Umsetzungsprodukte von di- und/oder multifunktionellen (Poly-)Isocyanaten mit Hydroxylpolyestern aus Polyolen und Dicarbonsäuren oder deren für Kondensationsreaktionen geeignete Derivate,
**dadurch gekennzeichnet,**
**dass** als Dicarbonsäure mindestens eine lineare aliphatische Dicarbonsäure mit 13 bis 22 Methylengruppen eingesetzt wird.

2. Feuchtigkeitsvernetzende Schmelzklebstoffe nach Anspruch 1, enthaltend 1 - 99 % Gew.-% der Polyester.

3. Feuchtigkeitsvemetzende Schmelzklebstoffe nach Anspruch 1, enthaltend 1 - 49 % Gew.-% der Polyester.

4. Feuchtigkeitsvernetzende Schmelzklebstoffe nach Anspruch 1, enthaltend 1-35% Gew.-% der Polyester.

5. Feuchtigkeitsvernetzende Schmelzklebstoffe nach einem der vohergehenden Ansprüche,
**dadurch gekennzeichnet,**
**dass** als Dicarbonsäure Octadecandisäure eingesetzt wird.

6. Feuchtigkeitsvernetzende Schmelzklebstoffe nach einem der vohergehenden Ansprüche,
**dadurch gekennzeichnet,**
**dass** als Dicarbonsäure Hexadecandisäure eingesetzt wird.

7. Feuchtigkeitsvernetzende Schmelzklebstoffe nach einem der vohergehenden Ansprüche,
**dadurch gekennzeichnet,**
**dass** die Hydroxylpolyester einen Schmelzpunkt von 30 °C-125 °C besitzen.

8. Feuchtigkeitsvernetzende Schmelzklebstoffe nach einem der vohergehenden Ansprüche,
**dadurch gekennzeichnet,**
**dass** die Hydroxylpolyester einen Schmelzpunkt 65 °C -115 °C besitzen.

9. Feuchtigkeitsvernetzende Schmelzklebstoffe nach einem der vohergehenden Ansprüche,
**dadurch gekennzeichnet,**
**dass** die Hydroxylpolyester einen Schmelzpunkt von 70 °C -110 °C besitzen.

10. Feuchtigkeitsvernetzende Schmelzklebstoffe nach einem der vorhergehenden Ansprüche,
**dadurch gekennzeichnet,**
**dass** bis zu 95 mol-% der linearen aliphatischen Dicarbonsäure mit 13 bis 22 Methylengruppen durch Dicarbonsäuren mit kürzeren Kohlenstoffketten ersetzt sind.

11. Feuchtigkeitsvernetzende Schmelzklebstoffe nach einem der vorhergehenden Ansprüche,
**dadurch gekennzeichnet,**
**dass** bis zu 80 mol-% der linearen aliphatischen Dicarbonsäure mit 13 bis 22 Methylengruppen durch Dicarbonsäuren mit kürzeren Kohlenstoffketten ersetzt sind.

12. Feuchtigkeitsvernetzende Schmelzklebstoffe nach einem der vorhergehenden Ansprüche,
**dadurch gekennzeichnet,**
**dass** bis zu 50 mol-% der linearen aliphatischen Dicarbonsäure mit 13 bis 22 Methylengruppen durch Dicarbonsäuren mit kürzeren Kohlenstoffketten ersetzt sind.

13. Feuchtigkeitsvernetzende Schmelzklebstoffe nach einem der vorhergehenden Ansprüche,
**dadurch gekennzeichnet,**
**dass** bis zu 95 mol-% der linearen aliphatischen Dicarbonsäure mit 13 bis 22 Methylengruppen durch aromatische Dicarbonsäuren ersetzt sind.

14. Feuchtigkeitsvernetzende Schmelzklebstoffe nach einem der vorhergehenden Ansprüche,
**dadurch gekennzeichnet,**
**dass** bis zu 80 mol-% der linearen aliphatischen Dicarbonsäure mit 13 bis 22 Methylengruppen durch aromatische Dicarbonsäuren ersetzt sind.

15. Feuchtigkeitsvernetzende Schmelzklebstoffe nach einem der vorhergehenden Ansprüche,
**dadurch gekennzeichnet,**
**dass** bis zu 50 mol-% der linearen aliphatischen Dicarbonsäure mit 13 bis 22 Methylengruppen durch aroamtische Dicarbonsäuren ersetzt sind.

16. Feuchtigkeitsvernetzende Schmelzklebstoffe nach einem der vohergehenden Ansprüche,
**dadurch gekennzeichnet,**
**dass** die Hydroxylpolyester einen Schmelzpunkt von 30°C - 140 °C besitzen, sofern sie aromatische Dicarbonsäuren als Comonomere enthalten.

17. Verfahren zur Herstellung von feuchtigkeitsvernetzenden Schmelzklebstoffen für die sofortige Weiterverarbeitung der verklebten Substrate, enthaltend Umsetzungsprodukte von di- und/oder multifunktionellen (Poly-)Isocyanaten mit Hydroxylpolyestern aus Polyolen und Dicarbonsäuren oder deren für Kondensationsreaktionen geeignete Derivate,
**dadurch gekennzeichnet,**
**dass** als Dicarbonsäure eine lineare aliphatische Dicarbonsäure mit 13 bis 22 Methylengruppen eingesetzt wird

18. Verfahren zur Herstellung von feuchtigkeitsvernetzenden Schmelzklebstoffen nach einem der vorhergehenden Ansprüche,
**dadurch gekennzeichnet,**
**dass** als Dicarbonsäure Octadecandisäure eingesetzt wird.

19. Verfahren zur Herstellung von feuchtigkeitsvernetzenden Schmelzklebstoffen nach einem der vorhergehenden Ansprüche,
**dadurch gekennzeichnet,**
**dass** als Dicarbonsäure Hexadecandisäure eingesetzt wird

20. Verfahren zur Herstellung von feuchtigkeitsvernetzenden Schmelzklebstoffen nach einem der vorhergehenden Ansprüche,
**dadurch gekennzeichnet,**
**dass** die Hydroxylpolyester einen Schmelzpunkt von 30 °C-125 °C besitzen.

21. Verfahren zur Herstellung von feuchtigkeitsvernetzenden Schmelzklebstoffen nach einem der vorhergehenden Ansprüche,
**dadurch gekennzeichnet,**
**dass** die Hydroxylpolyester einen Schmelzpunkt von 65 °C-115 °C besitzen.

22. Verfahren zur Herstellung von feuchtigkeitsvernetzenden Schmelzklebstoffen nach einem der vorhergehenden Ansprüche,
**dadurch gekennzeichnet,**
**dass** die Hydroxylpolyester einen Schmelzpunkt von 70 °C-110 °C besitzen.

23. Verfahren zur Herstellung von feuchtigkeitsvemetzenden Schmelzklebstoffen nach einem der vorhergehenden Ansprüche,
**dadurch gekennzeichnet,**
**dass** bis zu 95 mol-% der linearen aliphatischen Dicarbonsäure mit 13 bis 22 Methylengruppen durch Dicarbonsäuren mit kürzeren Kohlenstoffketten ersetzt sind.

24. Verfahren zur Herstellung von feuchtigkeitsvemetzenden Schmelzklebstoffen nach einem der vorhergehenden Ansprüche,
**dadurch gekennzeichnet,**
**dass** bis zu 80 mol-% der linearen aliphatischen Dicarbonsäure mit 13 bis 22 Methylengruppen durch Dicarbonsäuren mit kürzeren Kohlenstoffketten ersetzt sind.

25. Verfahren zur Herstellung von feuchtigkeitsvernetzenden Schmelzklebstoffen nach einem der vorhergehenden Ansprüche,
**dadurch gekennzeichnet,**
**dass** bis zu 50 mol-% der linearen aliphatischen Dicarbonsäure mit 13 bis 22 Methylengruppen durch Dicarbonsäuren mit kürzeren Kohlenstoffketten ersetzt sind.

26. Verfahren zur Herstellung von feuchtigkeitsvernetzenden Schmelzklebstoffen nach einem der vorhergehenden Ansprüche,
**dadurch gekennzeichnet,**
**dass** bis zu 95 mol-% der linearen aliphatischen Dicarbonsäure mit 13 bis 22 Methylengruppen durch aromatische Dicarbonsäuren ersetzt sind.

27. Verfahren zur Herstellung von feuchtigkeitsvemetzenden Schmelzklebstoffen nach einem der vorhergehenden Ansprüche,
**dadurch gekennzeichnet,**
**dass** bis zu 80 mol-% der linearen aliphatischen Dicarbonsäure mit 13 bis 22 Methylengruppen durch aromatische Dicarbonsäuren ersetzt sind.

28. Verfahren zur Herstellung von feuchtigkeitsvemetzenden Schmelzklebstoffen nach einem der vorhergehenden Ansprüche,
**dadurch gekennzeichnet,**
**dass** bis zu 50 mol-% der linearen aliphatischen Dicarbonsäure mit 13 bis 22 Methylengruppen durch aromatische Dicarbonsäuren ersetzt sind.

29. Verfahren zur Herstellung von feuchtigkeitsvernetzenden Schmelzklebstoffen nach einem der vorhergehenden Ansprüche,
**dadurch gekennzeichnet,**
**dass** die Hydroxylpolyester einen Schmelzpunkt von 30 °C - 140 °C besitzen, sofern sie aromatische Dicarbonsäuren als Comonomere enthalten.

30. Verwendung von feuchtigkeitsvernetzenden Schmelzklebstoffen nach einem der vorherigen Ansprüche für Anwendungen mit sofortiger Weiterverarbeitung der verklebten Substrate.

## Claims

1. Moisture-crosslinking hotmelt adhesives for the immediate further processing of bonded substrates, comprising reaction products of difunctional and/or polyfunctional (poly)isocyanates with hydroxyl polyesters formed from polyols and dicarboxylic acids or derivatives thereof suitable for condensation reactions, **characterized in that** at least one linear aliphatic dicarboxylic acid having from 13 to 22 methylene groups is used as dicarboxylic acid.

2. Moisture-crosslinking hotmelt adhesives according to Claim 1, containing 1-99% by weight of the polyesters.

3. Moisture-crosslinking hotmelt adhesives according to Claim 1, containing 1-49% by weight of the polyesters.

4. Moisture-crosslinking hotmelt adhesives according to Claim 1, containing 1-35% by weight of the polyesters.

5. Moisture-crosslinking hotmelt adhesives according to any one of the preceding claims, **characterized in that** octadecanedioic acid is used as dicarboxylic acid.

6. Moisture-crosslinking hotmelt adhesives according to any one of the preceding claims, **characterized in that** hexadecanedioic acid is used as dicarboxylic acid.

7. Moisture-crosslinking hotmelt adhesives according to any one of the preceding claims, **characterized in that** the hydroxyl polyesters possess a melting point of 30°C-125°C.

8. Moisture-crosslinking hotmelt adhesives according to any one of the preceding claims, **characterized in that** the hydroxyl polyesters possess a melting point of 65°C-115°C.

9. Moisture-crosslinking hotmelt adhesives according to any one of the preceding claims, **characterized in that** the hydroxyl polyesters possess a melting point of 70°C-110°C

10. Moisture-crosslinking hotmelt adhesives according to any one of the preceding claims, **characterized in that** up to 95 mol% of the linear aliphatic dicarboxylic acid having from 13 to 22 methylene groups has been replaced by dicarboxylic acids having shorter carbon chains.

11. Moisture-crosslinking hotmelt adhesives according to any one of the preceding claims, **characterized in that** up to 80 mol% of the linear aliphatic dicarboxylic acid having from 13 to 22 methylene groups has been replaced by dicarboxylic acids having shorter carbon chains.

12. Moisture-crosslinking hotmelt adhesives according to any one of the preceding claims, **characterized in that** up to 50 mol% of the linear aliphatic dicarboxylic acid having from 13 to 22 methylene groups has been replaced by dicarboxylic acids having shorter carbon chains.

13. Moisture-crosslinking hotmelt adhesives according to any one of the preceding claims, **characterized in that** up to 95 mol% of the linear aliphatic dicarboxylic acid having from 13 to 22 methylene groups has been replaced by aromatic dicarboxylic acids.

14. Moisture-crosslinking hotmelt adhesives according to any one of the preceding claims, **characterized in that** up to 80 mol% of the linear aliphatic dicarboxylic acid having from 13 to 22 methylene groups has been replaced by aromatic dicarboxylic acids.

15. Moisture-crosslinking hotmelt adhesives according to any one of the preceding claims, **characterized in that** up to 50 mol% of the linear aliphatic dicarboxylic acid having from 13 to 22 methylene groups has been replaced by aromatic dicarboxylic acids.

16. Moisture-crosslinking hotmelt adhesives according to any one of the preceding claims, **characterized in that** the hydroxyl polyesters possess a melting point of 30°C-140°C if they contain aromatic dicarboxylic acids as comonomers.

17. Process for producing moisture-crosslinking hotmelt adhesives for the immediate further processing of bonded substrates, comprising reaction products of difunctional and/or polyfunctional (poly)isocyanates with hydroxyl polyesters formed from polyols and dicarboxylic acids or derivatives thereof suitable for condensation reactions, **characterized in that** at least one linear aliphatic dicarboxylic acid having from 13 to 22 methylene groups is used as dicarboxylic acid.

18. Process for producing moisture-crosslinking hotmelt adhesives according to any one of the preceding claims, **characterized in that** octadecanedioic acid is used as dicarboxylic acid.

19. Process for producing moisture-crosslinking hotmelt adhesives according to any one of the preceding claims, **characterized in that** hexadecanedioic acid is used as dicarboxylic acid.

20. Process for producing moisture-crosslinking hotmelt adhesives according to any one of the preceding claims, **characterized in that** the hydroxyl polyesters possess a melting point of 30°C-125°C.

21. Process for producing moisture-crosslinking hotmelt adhesives according to any one of the preceding claims, **characterized in that** the hydroxyl polyesters possess a melting point of 65°C-115°C.

22. Process for producing moisture-crosslinking hotmelt adhesives according to any one of the preceding claims, **characterized in that** the hydroxyl polyesters possess a melting point of 70°C-110°C.

23. Process for producing moisture-crosslinking hotmelt adhesives according to any one of the preceding claims, **characterized in that** up to 95 mol% of the linear aliphatic dicarboxylic acid having from 13 to 22 methylene groups has been replaced by dicarboxylic acids having shorter carbon chains.

24. Process for producing moisture-crosslinking hotmelt adhesives according to any one of the preceding claims, **characterized in that** up to 80 mol% of the linear aliphatic dicarboxylic acid having from 13 to 22 methylene groups has been replaced by dicarboxylic acids having shorter carbon chains.

25. Process for producing moisture-crosslinking hotmelt adhesives according to any one of the preceding claims, **characterized in that** up to 50 mol% of the linear aliphatic dicarboxylic acid having from 13 to 22 methylene groups has been replaced by dicarboxylic acids having shorter carbon chains.

26. Process for producing moisture-crosslinking hotmelt adhesives according to any one of the preceding claims, **characterized in that** up to 95 mol% of the linear aliphatic dicarboxylic acid having from 13 to 22 methylene groups has been replaced by aromatic dicarboxylic acids.

27. Process for producing moisture-crosslinking hotmelt adhesives according to any one of the preceding claims, **characterized in that** up to 80 mol% of the linear aliphatic dicarboxylic acid having from 13 to 22 methylene groups has been replaced by aromatic dicarboxylic acids.

28. Process for producing moisture-crosslinking hotmelt adhesives according to any one of the preceding claims, **characterized in that** up to 50 mol% of the linear aliphatic dicarboxylic acid having from 13 to 22 methylene groups has been replaced by aromatic dicarboxylic acids.

29. Process for producing moisture-crosslinking hotmelt adhesives according to any one of the preceding claims, **characterized in that** the hydroxyl polyesters possess a melting point of 30°C-140°C if they contain aromatic dicarboxylic acids as comonomers.

30. Use of moisture-crosslinking hotmelt adhesives as claimed or set forth in any one of the preceding claims for applications with immediate further processing of the bonded substrates.

## Revendications

1. Adhésifs thermofusibles réticulant à l'humidité pour le traitement supplémentaire immédiat des substrats collés, comprenant des produits de réaction de (poly)isocyanates difonctionnels et/ou multifonctionnels avec des hydroxylpolyesters de polyols et d'acides dicarboxyliques ou de leurs dérivés appropriés pour des réactions de condensation, **caractérisés en ce que** l'on utilise au moins un acide dicarboxylique aliphatique linéaire renfermant de 13 à 22 groupes méthylène en tant qu'acide dicarboxylique.

2. Adhésifs thermofusibles réticulant à l'humidité selon la revendication 1, comprenant de 1 à 99 % en poids des polyesters.

3. Adhésifs thermofusibles réticulant à l'humidité selon la revendication 1, comprenant de 1 à 49 % en poids des polyesters.

4. Adhésifs thermofusibles réticulant à l'humidité selon la revendication 1, comprenant de 1 à 35 % en poids des polyesters.

5. Adhésifs thermofusibles réticulant à l'humidité selon l'une quelconque des revendications précédentes, **caractérisés en ce que** l'on utilise l'acide octadécanedioïque en tant qu'acide dicarboxylique.

6. Adhésifs thermofusibles réticulant à l'humidité selon l'une quelconque des revendications précédentes, **caractérisés en ce que** l'on utilise l'acide hexadécanedioïque en tant qu'acide dicarboxylique.

7. Adhésifs thermofusibles réticulant à l'humidité selon l'une quelconque des revendications précédentes, **caractérisés en ce que** les hydroxylpolyesters présentent un point de fusion de 30°C à 125°C.

8. Adhésifs thermofusibles réticulant à l'humidité selon l'une quelconque des revendications précédentes, **caractérisés en ce que** les hydroxylpolyesters présentent un point de fusion de 65°C à 115°C.

9. Adhésifs thermofusibles réticulant à l'humidité selon l'une quelconque des revendications précédentes, **caractérisés en ce que** les hydroxylpolyesters présentent un point de fusion de 70°C à 110°C.

10. Adhésifs thermofusibles réticulant à l'humidité selon l'une quelconque des revendications précédentes, **caractérisés en ce que** jusqu'à 95 % en moles de l'acide dicarboxylique aliphatique linéaire renfermant de 13 à 22 groupes méthylène sont remplacés par des acides dicarboxyliques présentant des chaînes carbonées plus courtes.

11. Adhésifs thermofusibles réticulant à l'humidité selon l'une quelconque des revendications précédentes, **caractérisés en ce que** jusqu'à 80 % en moles de l'acide dicarboxylique aliphatique linéaire renfermant de 13 à 22 groupes méthylène sont remplacés par des acides dicarboxyliques présentant des chaînes carbonées plus courtes.

12. Adhésifs thermofusibles réticulant à l'humidité selon l'une quelconque des revendications précédentes, **caractérisés en ce que** jusqu'à 50 % en moles de l'acide dicarboxylique aliphatique linéaire renfermant de 13 à 22 groupes méthylène sont remplacés par des acides dicarboxyliques présentant des chaînes carbonées plus courtes.

13. Adhésifs thermofusibles réticulant à l'humidité selon l'une quelconque des revendications précédentes, **caractérisés en ce que** jusqu'à 95 % en moles de l'acide dicarboxylique aliphatique linéaire renfermant de 13 à 22 groupes méthylène sont remplacés par des acides dicarboxyliques aromatiques.

14. Adhésifs thermofusibles réticulant à l'humidité selon l'une quelconque des revendications précédentes, **caractérisés en ce que** jusqu'à 80 % en moles de l'acide dicarboxylique aliphatique linéaire renfermant de 13 à 22 groupes méthylène sont remplacés par des acides dicarboxyliques aromatiques.

15. Adhésifs thermofusibles réticulant à l'humidité selon l'une quelconque des revendications précédentes, **caractérisés en ce que** jusqu'à 50 % en moles de l'acide dicarboxylique aliphatique linéaire renfermant de 13 à 22 groupes méthylène sont remplacés par des acides dicarboxyliques aromatiques.

16. Adhésifs thermofusibles réticulant à l'humidité selon l'une quelconque des revendications précédentes, **caractérisés en ce que** les hydroxylpolyesters présentent un point de fusion de 30°C à 140°C s'ils renferment des acides dicarboxyliques aromatiques en tant que comonomères.

17. Procédé de préparation d'adhésifs thermofusibles réticulant à l'humidité pour le traitement supplémentaire immédiat des substrats collés, comprenant des produits de réaction (poly)isocyanates difonctionnels et/ou multifonctionnels avec des hydroxylpolyesters de polyols et d'acides dicarboxyliques ou de leurs dérivés appropriés pour des réactions de condensation, **caractérisé en ce que** l'on utilise un acide dicarboxylique aliphatique linéaire renfermant de 13 à 22 groupes méthylène en tant qu'acide dicarboxylique.

18. Procédé de préparation d'adhésifs thermofusibles réticulant à l'humidité selon l'une quelconque des revendications précédentes, **caractérisé en ce que** l'on utilise de l'acide octadécanedioïque en tant qu'acide dicarboxylique.

19. Procédé de préparation d'adhésifs thermofusibles réticulant à l'humidité selon l'une quelconque des revendications précédentes, **caractérisé en ce que** l'on utilise de l'acide hexadécanedioïque en tant qu'acide dicarboxylique.

20. Procédé de préparation d'adhésifs thermofusibles réticulant à l'humidité selon l'une quelconque des revendications précédentes, **caractérisé en ce que** les hydroxylpolyesters présentent un point de fusion de 30°C à 125°C.

21. Procédé de préparation d'adhésifs thermofusibles réticulant à l'humidité selon l'une quelconque des revendications précédentes, **caractérisé en ce que** les hydroxylpolyesters présentent un point de fusion de 65°C à 115°C.

22. Procédé de préparation d'adhésifs thermofusibles réticulant à l'humidité selon l'une quelconque des revendications précédentes, **caractérisé en ce que** les hydroxylpolyesters présentent un point de fusion de 70°C à 110°C.

23. Procédé de préparation d'adhésifs thermofusibles réticulant à l'humidité selon l'une quelconque des revendications précédentes, **caractérisé en ce que** jusqu'à 95 % en moles de l'acide dicarboxylique aliphatique linéaire renfermant de 13 à 22 groupes méthylène sont remplacés par des acides dicarboxyliques présentant des chaînes carbonées plus courtes.

24. Procédé de préparation d'adhésifs thermofusibles réticulant à l'humidité selon l'une quelconque des revendications précédentes, **caractérisé en ce que** jusqu'à 80 % en moles de l'acide dicarboxylique aliphatique linéaire renfermant de 13 à 22 groupes méthylène sont remplacés par des acides dicarboxyliques présentant des chaînes carbonées plus courtes.

25. Procédé de préparation d'adhésifs thermofusibles réticulant à l'humidité selon l'une quelconque des revendications précédentes, **caractérisé en ce que** jusqu'à 50 % en moles de l'acide dicarboxylique aliphatique linéaire renfermant de 13 à 22 groupes méthylène sont remplacés par des acides dicarboxyliques présentant des chaînes carbonées plus courtes.

26. Procédé de préparation d'adhésifs thermofusibles réticulant à l'humidité selon l'une quelconque des revendications précédentes, **caractérisé en ce que** jusqu'à 95 % en moles de l'acide dicarboxylique aliphatique linéaire renfermant de 13 à 22 groupes méthylène sont remplacés par des acides dicarboxyliques aromatiques.

27. Procédé de préparation d'adhésifs thermofusibles réticulant à l'humidité selon l'une quelconque des revendications précédentes, **caractérisé en ce que** jusqu'à 80 % en moles de l'acide dicarboxylique aliphatique linéaire renfermant de 13 à 22 groupes méthylène sont remplacés par des acides dicarboxyliques aromatiques.

28. Procédé de préparation d'adhésifs thermofusibles réticulant à l'humidité selon l'une quelconque des revendications précédentes, **caractérisé en ce que** jusqu'à 50 % en moles de l'acide dicarboxylique aliphatique linéaire renfermant de 13 à 22 groupes méthylène sont remplacés par des acides dicarboxyliques aromatiques.

29. Procédé de préparation d'adhésifs thermofusibles réticulant à l'humidité selon l'une quelconque des revendications précédentes, **caractérisé en ce que** les hydroxylpolyesters présentent un point de fusion de 30°C à 140°C s'ils renferment des acides dicarboxyliques aromatiques en tant que comonomères.

30. Utilisation d'adhésifs thermofusibles réticulant à l'humidité selon l'une quelconque des revendications précédentes, pour des applications avec un traitement supplémentaire immédiat des substrats collés.
